# EUROPEAN PATENT APPLICATION

(11) **EP 2 293 095 A1**
(43) Date of publication of application: **09.03.2011**
(21) Application number: 09757637.5
(22) Date of filing: 14.05.2009
(51) Int. Cl.: G01S 5/02, G01S 1/68, G01S 3/14, A01K 11/00

(54) **RADIO-TRACKING METHOD, SYSTEM AND DEVICES**

(30) Priority: 05.06.2008 ES 200801799
(71) Applicant: Tinytronic S.l., Mataró Barcelona 08302 (ES)
(72) Inventor: LOPEZ POU, Andrés, E-08392 Sant Andreu de Llavaneres (Barcelona) (ES); VAZQUEZ GALLEGO, Francisco, E-08840 Viladecans (Barcelona) (ES); CANO CAMPS, Albert, E-08302 Mataró (Barcelona) (ES)
(74) Representative: Mohammadian, Dario
(86) International application number: PCT/ES2009/000259
(87) International publication number: WO 2009/147258

(57) **Abstract**

A device configured to be worn by a target to be located, a console device for displaying information relating to the position, direction and distance of the target with respect to a person using the console, and a system and a method for searching for and locating a target by means of radiotracking.

## Description

### FIELD OF THE INVENTION

The present invention relates to the field of telecommunications, and in particular to a radiotracking device, for searching for and tracking objects and/or animals and persons.

### BACKGROUND OF THE INVENTION

The technique of radiotracking allows incorporating emitters to animals, objects or persons, in order to locate them subsequently with a receiver that communicates with the emitter by electromagnetic signals, even at very large distances in the range of several tens of kilometers.

This technique can be used for any application that requires locating an object and subsequently tracking and following the object while it moves. This tracking process is also known as radiotracking. In this document, the terms radiotracking and radiolocation will be used interchangeably, as the device object of the invention provides both the wireless location and tracking functionality by means of radiofrequency.

In the following, the term "carrier" will be used to define the carrier of the transmitter/receiver, or transceiver, which will normally be animals, objects or persons, whether mobile or not, object of the tracking and location. The carrier can also be any other object, regardless of its size or shape, to which a radiotracking device can be coupled. The term "user" will be used to define the person, object, machine or animal which makes use of the information provided by the locating device to locate and track the carrier.

An example of this application can be in falconry, so that the wild birds accompanying the falconer in a hunt are not lost. If the user loses sight of the animal, which is quite common in this activity given the great mobility of the animals and their range of action, the aid of a tracking device is necessary to find the bird again. In addition, a location and tracking device is necessary during a training process in order to teach the birds the proper habits. Similarly, it is possible to train hunting dogs or even pigeons in pigeonry.

Another application is conservation of fauna, where it is necessary to use a device of this type to complete studies on migrations, reproduction or even attitudes of animals. A further application is the monitoring of pets so that they are always located. In this way, the pet owners are also more relaxed knowing that, even if their pet is not in view, they have them located.

The radiotracking technique is based on the emission of radioelectric pulses from a transmitter at a specific frequency, using an omnidirectional antenna to radiate power in all directions, and the reception of these pulses by a receiver tuned to said frequency, using a directional antenna. The directional antenna in the receiver allows an angular discrimination of changes in the power of the received signal, and therefore to provide an estimate of the orientation from which the electromagnetic pulses are received.

The transmitters are carried by the objects to locate, whether one or several carriers, while at least one receiver will be able to receive the signals emitted by the multiple transmitters. A person skilled in the art will realise the various possible modifications of this embodiment, such as having multiple receivers to receive the signals emitted by multiple transmitters.

Conventional radiotracking units have the drawback of their large size. However, they have the advantage of a greater sensitivity when receiving signals, and therefore can receive very weak signals with very low intensity. Similarly, they can receive with considerable accuracy signals emitted from very large distances, in the range of several tens or even hundreds of kilometers.

The latest developments in digital integration offer the advantage of size reduction. By allowing signals to be processed digitally, they are more accurate and reliable. However, their sensitivity to signal reception is typically lower than that of the conventional devices.

Radiotracking devices are normally based on the emission of energy pulses in radio frequency (RF) by a transmitter, the width and distance between pulses being fixed parameters that cannot be changed while the device is operating. They also do not allow adding information of any type to the pulse emitted by the transmitter.

When the receiver receives the pulses emitted, the incoming signal is directly converted into audible signals. As the intensity of the audible signal is directly proportional to the intensity of the RSSI received signal, the user, with the receiver in hand, can discriminate whether the receiver is pointing in the right direction and have an idea of the distance to the carrier of the transmitter, simply by listening to the signal. However, in order for users to be able to tell which audible signal is louder and therefore which direction is correct, they must turn about their own axis. In addition, if the pulse signal is received with very low intensity due to a temporary high attenuation and the user hears a low amplitude, he or she may obtain an incorrect impression of the distance, believing that the carrier is at a large distance.

Therefore, the radiotracking techniques of the state of the art have the drawback that they only allow estimating the direction of the carrier and cannot determine the actual direction accurately. They also do not allow determining the distance to the carrier, as they lack the data necessary to determine this distance accurately.

A further drawback of the existing devices is that their angular resolution for determining direction is highly dependent on the directivity of the antenna used. In addition, as stated above, they require an angular movement or turning of the receiver to be able to estimate the direction of the carrier.

In general, state of the art devices require users to undergo a learning process, generally quite long, to get accustomed to using the pulsing devices for locating and tracking the lost object. This process may be inconvenient to the user and therefore hinders their commercialisation.

There are positioning devices available in the market based on the Global Positioning System technology, or GPS. This technology is based on the reception by a land device of several signals emitted by at least three satellites, allowing, in addition to advanced signal processing, to calculate the position of the carrier of the GPS reception device with an accuracy in the range of meters. However, most GPS devices are applied in situations in which a user can locate oneself, as the carrier of the device. These devices are not designed to allow a user to locate a carrier that is far from the GPS device of the tracking user.

There are a few GPS devices with uni-directional communication functionality. This is, they allow transmission by a carrier and reception by a console of the parameters that define the location of the carrier, allowing the position of a carrier to be determined by a user able to receive and process this information. These devices allow displaying on the screen the evolution of the direction of the carrier's movements. They also allow memorising virtual coordinates where the carrier has been.

The great drawback of these devices is that when they are in areas with low or no satellite coverage, their functionality is lost completely. In the case of the console, this can occur when the user is inside a building, between mountains, in dense forests, in a vehicle, or in a house or cave. In the case of the carrier device, this can occur if the target to be tracked falls inside a hole, or is immobilised with the GPS antenna pointing towards the ground, or is inside a building or cave.

Uni-directional communication is implemented using a data link, such as General Packet Radio System (GPRS), of a mobile services provider, which requires integrating a module for a Subscriber Identity Module (SIM), as well as paying a monthly fee. This property increases substantially the operating costs of the system.

A further drawback of these devices is that they use short-range communication protocols, such as Bluetooth, or that the sensitivity of the receivers is very low, allowing to receive signals only at very short distances, in the range of tens of meters. Even at these short distances, they consume a lot of power due to the operation of the GPS module, and therefore have a very limited autonomy.

Moreover, the communication direction is always from carrier to console, so that the GPS devices of the state of the art have the drawback of not allowing bi-directional communication in which the console can send data to the carrier.

Therefore, the range of GPS transmission of position information is much lower than the range of transmission of the position with the pulsed signal of the radiotracking solutions of the state of the art. In addition, this communication is uni-directional, defining only the possibility of receiving information from the carrier device and not transmitting information to it.

These GPS devices incorporate a magnetic sensor, or compass, allowing a correct orientation of the device towards the location of the coordinates received by the carrier with respect to the magnetic north. In this sense, a GPS device with position data transmission functionality has the advantage of not requiring to move the receiver angularly to estimate the direction and distance to the carrier. However, they still suffer from the drawback of the angular resolution for determining the direction depending on several factors, such as the intensity of reception of the GPS signal, the strength of the earth magnetic field at the specific geographical location, which changes from one area to another, metallic obstacles, and the effect of other artificial magnetic fields generated, for example, by electric stations or high-voltage cables.

Thus, there is a need to improve the devices of the state of the art to allow searching and locating via radiotracking of a carrier in order to solve some or all of the problems of the devices of the state of the art.

### SUMMARY OF THE INVENTION

The aforementioned problems and others are solved by the inventions disclosed herein. In particular, it is proposed to solve the above-described drawbacks by means of at least one radiotracking console device, at least one radiotracking carrier device, a radiotracking system and a radiotracking method, defining a search and tracking procedure for at least one carrier by at least one user.

The preferred embodiments of the new and inventive concept object of the independent claims are protected by the dependent claims, which define additional advantageous options to the general concept being claimed.

### BRIEF DESCRIPTION OF THE DRAWINGS

The present invention will be described with reference to the corresponding drawings. In the drawings, elements having the same reference number refer to identical or functionally similar elements. The drawings are used only to illustrate better the characteristics of the invention and do not limit in any way the possible embodiments described.

FIG. 1 shows the application of the device object of the invention to the location of an animal.

FIG. 2 shows an example of embodiment of part of the carrier device according to the invention.

FIG. 3 shows an example of embodiment of part of the console device according to the invention.

FIG. 4 shows an example of embodiment of a part of the positioning module according to the invention.

FIG. 5 shows an example of embodiment of part of the carrier device according to the invention.

FIG. 6 shows an example of embodiment of part of the console device according to the invention.

FIG. 7 shows an example of embodiment of energy pulse frames according to the invention.

FIG. 8 shows an example of embodiment of energy pulse frames in energy-saving mode according to the invention.

FIG. 9 shows an example of embodiment of energy pulse frames incorporating data signal according to the invention.

FIG. 10 shows different embodiments of the devices object of the invention.

FIG. 11 shows the different coverage areas defining the communication modes.

FIG. 12, FIG. 13 and FIG. 14 show several examples of the representation of the information available to the user of the devices object of the invention.

### DESCRIPTION OF EMBODIMENTS OF THE INVENTION

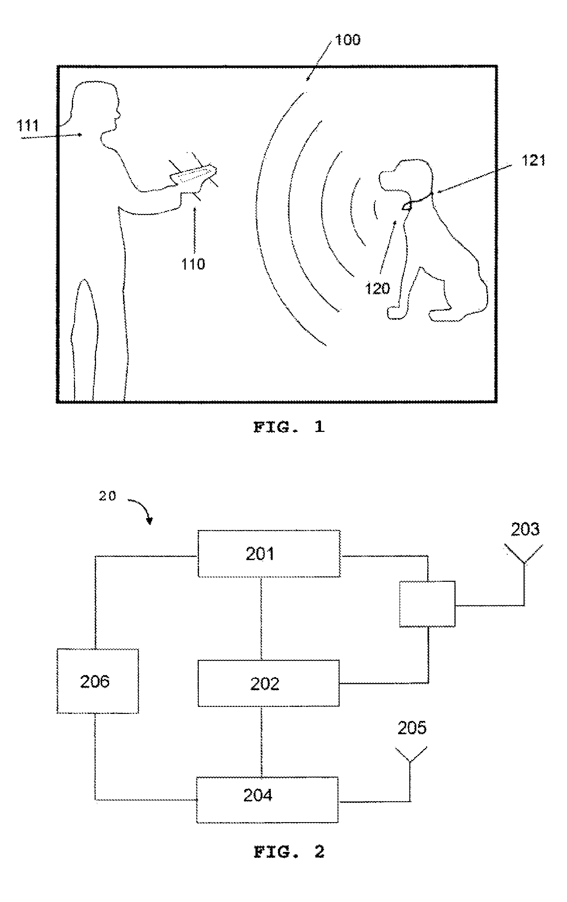

FIG. 1 shows a system 100 example embodiment of the invention. The system 100 comprises a console device 100 for the user 111, machine, object or animal, wishing to search and track a carrier 121 and a carrier device 120, coupled to the carrier, whether this is an object, person, machine, or animal. The device 120 must be registered with the console 110 to initialise the search and tracking operation.

The registration operation comprises among others assigning a common working radiofrequency for the two devices, saved in the console under an identification number for the carrier device 120. This number can consist of a name selected by the user to recognise the carrier, or the serial number of the carrier device, or the frequency at which the energy pulses are emitted, or the frequency at which the telemetric data signals are emitted, or a combination thereof. The registration can be implemented by default in factory, or when initialising a carrier with a console, changing the specified parameters each time.

The drawbacks of the state of the art are solved by the operation of the system, and specifically by the relationship between the console device 110 and the carrier device 120, as specified further below.

FIG. 2 shows an example embodiment 200 of a part of the carrier device 120 according to the invention. The device is adapted to be coupled to or be carried by a carrier, whether human or animal, object or machine, with or without consent. In this embodiment the carrier device comprises an RF radiofrequency energy pulse transmitter 201, a positioning module 204 and a data communication module 202, also via radio.

The energy pulses have the particularity of consisting of the emission of a carrier wave without a standard data transmission structure. It is therefore not a transmission of information involving data modulation that comprises a header and a payload.

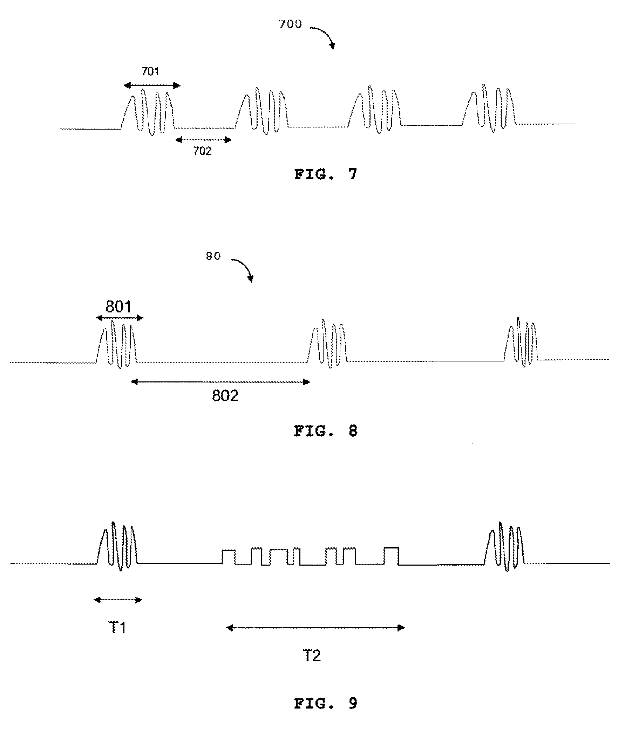

In other words, as can be seen in FIG. 7, it is an emission of energy at a certain frequency and for a specified length of time 702. The repetition of this pulse emission generates an energy pulse train with a certain periodicity defined by the length of time 702 between emissions.

The aim is that the periodicity defines a cadence allowing a receiver, whether human or not, to capture the pulse train and to use it as a guide to define the direction of origin of the pulses. In this way, the pulse train allows tracking the transmitter emitting the pulses even when it is moving.

Another characteristic of these radiotracking emissions in the form of energy pulses, that differentiates them from conventional data transmission, is that they are not directed at any one specific receiver. Instead, if a specific receiver is using a pulse train for tracking purposes, it can recognise the periodicity of the emission as arriving from the carrier being searched for. In other words, if multiple pulse trains are received a receiver will be able to discriminate the correct direction by extracting the "signature", represented by the cadence or periodicity of a specific pulse train, needed to track its target.

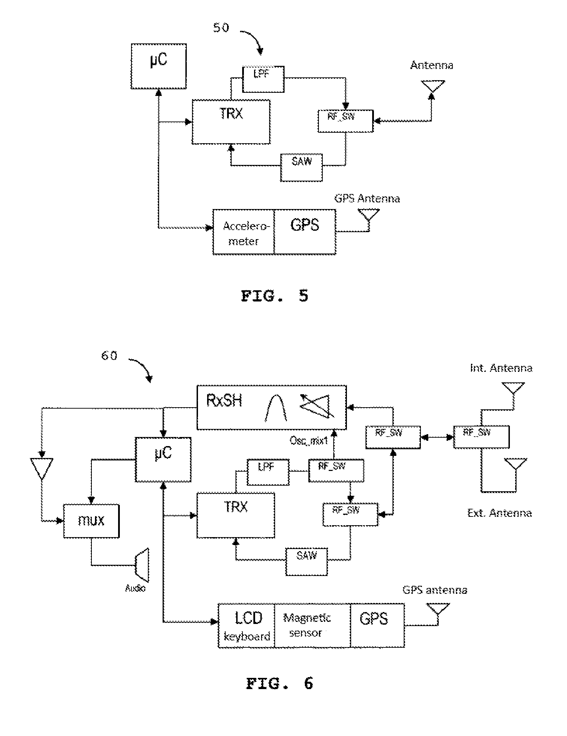

In addition to the transmitter 201 there is a data communication module. The transmitter 201 and the data communication module 202 share an omnidirectional antenna 203 through a switch. The positioning module 204 receives the signals via satellite through the antenna 205. A central microprocessor 206 coordinates the operation mode of the carrier device 120, determines which data are sent or received, in addition to applying the required signal processing. In an example of embodiment, the same transmitter is used to emit the energy pulses and the data frames. It is also possible to use independent transmitters. There is a switch that allows switching between transmission, whether of the pulse train or data signal, and reception of data emitted by the console. FIG. 5 shows another example embodiment of part of the carrier device 120.

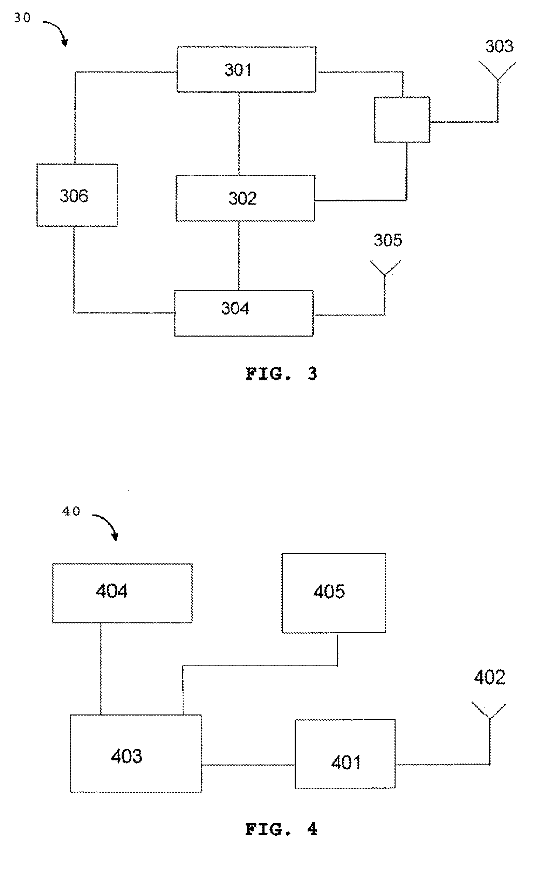

FIG. 3 shows an example embodiment of part of the console device 110 according to the invention. In this embodiment the console comprises a receiver 301 for the carrier wave or RF frequency energy pulses, a positioning module 304 and a data communication module 302, also via radiofrequency.

The receiver 301, which can be designed as a superheterodyne or homodyne receiver, and the data communication module 302 share a directional antenna 303 through a switch. It is also possible to set up an external directional antenna coupled by the user. This option has the advantage of increasing the reception sensitivity of the antenna and its directionality using an antenna with a higher performance.

The sensitivity of the receivers in general changes as a function not only of the antennas selected but also of all the internal signal processing modules that may be incorporated, helping to receive the signals better, such as frequency band filters, active or passive amplifiers, modulators, demodulators, encoders, decoders, amongst others.

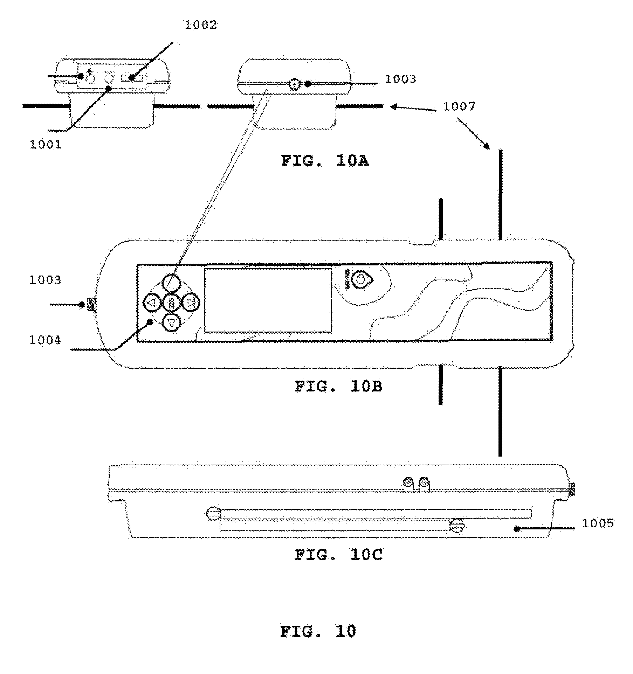

The positioning module 304 receives the signals via satellite though the antenna 305. A central microprocessor 306 coordinates the operation mode of the console device 110, determines which data are sent or received, and applies the necessary signal processing. There is a switch that allows changing between the transmission of the data signal and the reception of the data, or pulsed signal, emitted by the carrier. FIG. 6 and FIG. 10 show other example embodiments of the console device 110. FIG. 6 shows other switches for switching among antennas or reception and transmission modes or positioning modes. FIG. 10 shows the antenna 1007, a connection 1003 for an external antenna and an internal antenna 1006 of the receiver, as well as a connection for headphones 1001, for a Universal Serial Bus (USB) unit 1002 and the keyboard 1004.

This combination of radiotracking modules and positioning modules allows overcoming the drawbacks of the devices of the state of the art, as the system 100 enables, among other advantages, the following:
- improving the exact determination of the distance, direction and position of the carrier compared to an approximate estimation of the direction and position obtained by the pulse train. The direction to follow to search for the carrier is indicated by an arrow and the distance is indicated by a numerical indication or a proximity bar. In this way, the angular resolution is made independent of the directionality of the antenna of the console device. This advantage can be appreciated, for example, when the distance between the user and the target is so great that the target's movements are relatively small. These small changes cannot be discriminated with a radiotracking device according to the state of the art. However, a positioning module does provide the exact information;
- when a user carrying the console in his or her hand lacks satellite coverage, he or she must find a place, normally in an open space, in which to receive the satellite signals again, which may be cumbersome because it often involves climbing a mountain, getting out of a forest or exiting a building. More commonly, when the object of the invention is used to locate animals their mobility typically causes the carrier device to lack satellite coverage intermittently, as animals may hide in forests, under obstacles, or in the case of pets such as cats can enter and exit a building continuously. In both cases, due to the characteristics of the invention, the user will always receive the pulsed signal, providing an approximate indication of the movements of the carrier, allowing to move towards it appropriately. During the search, if the user enters a satellite coverage area an exact location of the carrier will be calculated;
- in addition, existing GPS systems can determine the position of a target with an accuracy of a few meters in the best of cases, such as 5 meters. But as soon as the satellite coverage falls even slightly, the combined error in the console and carrier device will be on the order of tens of meters, such as from 50 m to 100 m. This represents an error in the location area of several hundred square meters, for example from 100 m² to 2000m². This error margin is independent of whether the carrier is near or far from the user. However, according to the features of the invention, as the console gets nearer to the carrier device, the precision of the location estimate increases, to the extent that if they are next to each other a console can locate a carrier with an error of a few centimeters, such as 5 cm. This characteristic is particularly advantageous for locating buried persons, animals or objects, especially if they are at some depth or if the object is small. A similar advantage is obtained in the discrimination of altitude, as GPS systems have an accuracy of tens of meters in height, such as 50 m, while the present invention has the same accuracy regardless of the search direction, allowing to locate with an accuracy of a few centimeters, such as 5 cm.

Therefore, the synergy of this combination provides advantages not offered by the devices of the state of the art. On one hand, the positioning module improves the precision while locating the carrier, which reduces considerably the search time and increases the tracking reliability, increasing the mobile devices autonomy. On the other hand, when the satellite option is not available the continuous emission of the pulse train, or radiotracking signal, allows the user to continue searching correctly, at all times following the carrier within an error margin known to the user. This also results in time savings and a significant increase in device autonomy. In addition, the risk of definitively losing the carrier is greatly reduced, which would normally represent the highest cost to a typical user of this type of devices.

In short, the system described and the method of operation of the system maximise the accuracy when locating a target and minimise the risk of losing the target. In addition to these two effects there is the important advantage of the increased autonomy of the devices resulting from this combination.

The positioning modules of the two devices 110 and 120 are very similar. FIG. 4 shows an example embodiment of a positioning module 400 according to the invention. Module 400 comprises a receiver 401 and an antenna 402 for receiving signals via satellite. A microprocessor 403 processes the signals received to extract the data needed to calculate the position of the module 400, whether in a console 110 or a carrier device 120.

This positional information comprises the geographical coordinates defined by the latitude and longitude in addition to the speed and altitude of the carrier device. The microprocessor also carries out other signal processing functions and control of the various modules.

A magnetic sensor or electronic compass 404 carries out the function of detecting angular deviations from the terrestrial magnetic north, which is the reference used by satellite positioning systems. Integration of this magnetic sensor is optional, as it functionality is more necessary in the console device 110 than in the carrier device 120. The advantage of the compass 404 is that it allows the user to turn about his or her own axis, representing the direction correctly at all times as the magnetic north is used as reference. An alternative to the magnetic sensor is simply to take a few steps in a specific direction and determine how one's position changes with respect to the carrier's coordinates in order to correct the direction. In the preferred embodiment of the invention the console device 110 has an integrated magnetic sensor 404.

The correction provided by the magnetic sensor can be improved even further by an optional accelerometer 405. This module allows measuring and compensating the deviations of the positioning module with respect to the surface of the earth when the device turns or moves up to 15° with respect to the horizon. In addition, the accelerometer allows obtaining measurements of the user's movement, such as the speed or acceleration, which can be used to correct or improve the determination of the carrier's position, especially in case of little, or no, satellite coverage.

The positioning module also provides an indication of the accuracy of its position measurement. In addition to indicating in real time the current direction to the target to locate, it allows tracking it by representing on a screen the geographical evolution of the carrier's movement.

The positioning module 400 calculates the position according to the Global Positioning System (GPS) protocol in this example of a preferred embodiment. However, a person skilled in the art will realize that it is possible to change the protocol to any other one allowing to calculate the parameters needed to determine the position of the carrier with an accuracy in the range of meters. Other systems such as GLONASS, IRNSS or COMPASS are available as solutions for different terrestrial areas. In Europe the satellite positioning system currently being developed is the GALILEO satellite system.

FIG. 7 shows an example embodiment 700 for the energy pulse frames 701 emitted in selected frequencies of the radiofrequency (RF) band by transmitter 201, according to the invention. The carrier device 120 continuously emits these radiotracking pulses from the time it is turned on until it is turned off. This function allows a continuous tracking of the device and has the advantage of allowing the carrier to be tracked at great distances.

As can be seen in this embodiment, the pulse train has a pulse repetition interval 702 and a pulse width 701, as well as being transmitted using a specific phase.

The different modules of the console device 110 and carrier device 120 are powered by at least one battery. This battery may be rechargeable or disposable. Given the mobility of both devices in typical rural areas, there is a need to provide the different devices with maximum battery duration. In the case of the carrier device 120, a solution after detecting a low battery charge is to enter an "energy saving" mode and reduce the pulse emission frequency and pulse duration, thereby emitting with a lower average power. The resulting frame can be seen in FIG. 8, in which the pulse width 801 is less than the pulse width 701 of the normal mode of operation, and the pulse repetition interval 802 is greater than the interval 702 of the normal mode of operation. In this mode the positioning and data communication functionality of the module are disabled. Given the characteristics of the invention, this mode continues allowing to track the carrier while maximising the autonomy of the device while there is still power left in the battery.

The console device 110 is adapted to receive the energy pulses emitted by the carrier device 120 at the same frequency. As the pulse emission is continuous, from the time it is turned on to when it is turned off, the console receives these pulses and converts them by means of at least one transducer into an audible signal, using a loudspeaker or buzzer, or a vibration, to notify the user of the correct "marking" of the carrier.

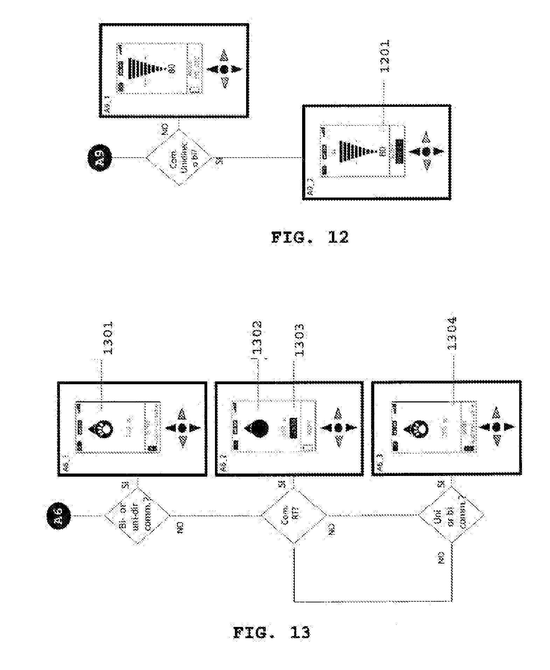

The microprocessor 306 is also adapted to calculate the reception power in terms of received signal intensity RSSI and convey this information, either alone or in combination with other data, as a graphical representation in the console screen. This graphical representation is very useful to help the user identify the direction and distance to the carrier. Different examples of graphical representations are shown in FIG. 12, FIG. 13 and FIG. 14.

The power can be determined by two methods. The first method uses the intensity of the received energy pulses and the second method uses the intensity of the data signal. It is also possible to use a combination of the two methods to reduce the error of the determination.

As shown in FIG. 2 and FIG. 3 the two devices 110, 120 integrate a data communication module. The main function of this module is to transmit information and data between the two devices. For example, the carrier device 120 can transmit the parameters that define its position to the console device 110 using the data communication module 202. The position data transmission frequency is a configurable parameter by the console, and can be implemented by FSK modulation. A person skilled in the art will understand that other types of modulation are also possible, allowing data exchange while maintaining the necessary, or previously-defined, reception quality.

It is possible to define a minimum transmission rate between devices. This option has the advantage of having a lower Bit Error Rate (BER). However, if circumstances such as the emission power or the distance between devices allow, data may be transmitted at a higher rate with the certainty that the link quality is good.

This data transmission, among other characteristics of the invention, allows solving the problem of the state of the art that the direction and distance to the carrier cannot be determined by the existing methods. By means of this data reception, the accuracy in the estimation of the direction or distance or position is improved, as the user can be given the geographical position coordinates, the exact direction to the carrier and the exact distance to it.

As the pulse transmitter and receiver are in continuous operation, data transmission is made possible by using the empty spaces T2 between pulse T1 and pulse T1, as shown in FIG. 9. In fact, this parameter can be configured by the console so that a percentage of the empty spaces between pulses T2 can be reserved for data transmission. This transmission is achieved by multiplexing the pulses and data, such as using Time Division Multiple Access, TDMA.

These empty spaces, or slots, T2 can be varied as a function of different parameters, such as the transmission distance, transmission power, slot assignment for data exchange, or assignment for sending set-up commands.

As an example, the slots can be defined to have a longer duration if it is not necessary to send tele-commands and the distance between the two devices is large. If the distance is reduced, a slot with a smaller duration can be defined to send the carrier data to the console with a greater frequency.

If it is necessary to transmit commands, slots of short duration are defined to allow sending not only data but also commands. It is even possible to define slots for sending communication control commands, such as to implement a handshake before and after sending data, or to establish a link, or to send and receive ACK and NACK.

It is also possible to define the slot duration and pulse duration ratio to observe a predefined ratio of transmission and silence periods, or duty cycle, in order to comply with a specific power consumption, or to avoid exceeding the maximum allowed by the various norms and standards.

The devices of the state of the art do not use the empty spaces between power pulses to transmit data. However, it is one of the objectives of this invention to improve the devices of the state of the art by using these unused spaces, in order to improve on the service and accuracy of existing radiolocation devices and on the reliability and likelihood of not losing a target of existing GPS devices.

Given this possibility of sending data, a link is defined between the console and carrier devices that can be bi-directional or uni-directional. The uni-directional link allows sending data from the carrier device to the console, such as the position data, as mentioned above. The bi-directional link also allows configuring the carrier device to change certain parameters, such as the frequency of calculation or delivery of position data by the GPS module, the power of the data or pulse transmission to the console, and others.

The possibility of configuring the devices to vary their operation allows numerous additional advantages to be offered. For example, several operational parameter can be modified in one or both devices in order to optimise the duration of the device batteries.

This aspect is particularly advantageous for the carrier device as since it is attached to animals, objects, machines or persons, it must be small and light. The battery is one of its heaviest components and has strict size and weight constraints, therefore greatly limiting the operational lifetime of the device.

Considering that it is generally of interest to have a duration as long as possible for the user's convenience, and especially if it takes longer than usual to locate and track the carrier when it is in areas of difficult access or simply because it is lost and is very far, the need to maximise battery duration in the console and carrier device is obvious.

Therefore, the autonomy of one or several carrier devices can be managed remotely using the bi-directional link. It is possible to configure at least one parameter to vary with the distance, or at the user's will. For example, a command from the console to the carrier device can define a specific data transmission frequency, the data transmission rate, or define a mode in which data is only transmitted when the console requests it. The combination of these modes is also possible, thereby defining on a first level a rate and frequency of data delivery until a new configuration command changes a parameter.

The parameters particularly linked to the distance between the two devices are those that define to a greater extent the power required and thus the battery duration. Among these parameters are, for example, the transmission power and capture frequency of the GPS position.

A procedure for managing the battery duration can be defined as an iterative algorithm that is optimised, considering at least one parameter of a plurality of variable parameters, such that the greater the distance between the console device 110 and the carrier device 120:
- the greater reception sensitivity will be needed by the communications module and radiotracking receiver, therefore the data transmission rate should be minimised;
- the frequency of signal reception via satellite and position calculation should be minimised, as this process consumes a lot of power;
- the frequency and/or rate of data transmission should be minimised to reduce the power consumed in the process;
- the transmission power should be optimised, reducing it however always maintaining a level suitable to allow receiving the emitted signal. This optimisation is based on the fact that the farther away the devices are, the greater the transmission power must be to compensate for the high attenuation. However, in order to minimise the battery consumption, the power can be managed so that within a suitable range that guarantees communication, the transmission power is minimised.

This allows obtaining an autonomy from 5 to 50 times greater than in the devices of the state of the art.

It is possible to turn on or turn off a specific device remotely and wirelessly by means of commands. It is also possible to request specific information, or make a diagnosis of the device, change its name, the pulse and data signal transmission frequency, add or remove a device, calibrate remotely, assign a security code, reset to factory parameters, request serial number and other actions. Delivery of other parameters for configuring the carrier device, requesting information, or other functions, is understood to be within the common knowledge of a person skilled in the art.

The configuration of variable parameters to increase the battery lifetime, or the opposite, a greater reduction in the size of the devices and their weight, do not have to be identical for the two devices. For example, the console does not have the same size and weight limitations as the carrier device and can incorporate larger batteries, or even have an adapter for connection to external power supplies, such as a car battery. In this case the console can define an optimisation of the algorithm for itself different from that of the carrier device.

This mode of operation has advantages in extreme situations, such as when the carrier is in a location so remote that it is already operating at the minimum working limit. In this case the intensity of the signal received by the console will be very low, and there will be no certainty of the accuracy of the calculations of the position of the carrier device by its positioning module, and even the radiotracking pulses are received with a very low signal strength.

In this environment it can be advantageous to the console to increase its operation parameters to maximise the likelihood that the carrier device will at least receive its configuration commands before communication is lost completely. The console will then start transmitting its last commands with greater power and more frequently.

It could also be advantageous, just before one of the two devices determines that it is about to lose communication completely, to increase the emission power by the transmitter 201 of the device 120 to ensure that the last geographical coordinates are received correctly by the console.

However, in a situation in which the carrier is really very distant from the console or one in which the free radiation of electromagnetic waves is not allowed, such as a dense forest or a cave, the carrier device 120 can be configured so that when it stops received configuration commands from the console for a time above a predefined threshold, it enters the "energy saving" mode in which the positioning and data communication modules stop operating and only the pulsed transmitter of the radiotracking module operates.

Optionally, an intermediate mode can be defined characterised in that the positioning module turns on to update the position values periodically before returning to the low power consumption mode. Thus, the communication module will also become active to transmit the latest position data, using "energy saving" parameters such as the minimum transmission speed before temporarily deactivating. This example of embodiment has the advantage that although communication is lost between the devices the carrier device will always have a track of its own position, and emitting signals with this information at a very low frequency will allow the console, permanently in search and track mode, to obtain a signal to guide the user to the carrier in order to get near enough to recover a full link.

In addition to sending position data, the carrier device can also send any other data using the defined communication protocol. For example, any telemetric data of interest for a better operation of the system, such as the different states and parameters of the device, such as the battery voltage, can be transmitted to the console either to optimise the operation of the system or to inform the user of the need to take action, either on the screen or with an audible signal.

It may also be of interest to send data from sensors integrated in the device or placed on the carrier. In this way the console can act as a central receiver for a plurality of sensors sent by means of a plurality of carrier devices. This can be useful to users interested in knowing the health conditions of their animals, or doctors monitoring the basic health parameters of a patient, among others.

The considerable improvement over solutions of the state of the art also resides in that not only the carrier device 120 transmits its position data to the console 110, but the console also calculates its position using the data of the positioning module 304.

The exact position of these two devices allows an accurate calculation of the angle to the carrier with respect to the user, and the distance with an accuracy of meters. In addition, these calculations are independent of the directionality of the antenna used. In addition the user does not have to rotate to find the direction in which the signal is received most strongly. The device object of the invention provides this information on the screen automatically without requiring the user to turn.

In order for the positioning module to calculate the exact direction to the carrier, the console must normally be placed in the horizontal plane perpendicular to the "console weight" vector. Instead, in practice, it is inconvenient for a user in motion to have to worry about holding the console at all times with this limitation in mind, generally about ±15° with respect to the horizontal. In addition, even with the active cooperation of the user it is not possible to guarantee an ideal calculation of the position.

This problem is solved by integrating an accelerometer in console 110. The optional electronic compass, together with the data from the accelerometer, allow the console 110 to consider the variations from its weight axis with respect to the terrestrial magnetic north and to correct itself. The accuracy of the position calculation is therefore considerably improved, particularly for mobile users carrying the console and therefore subjecting it to continuous movements and angle changes.

The interaction of the console and carrier devices allow a wide range of operation modes and different applications. The system 100 is designed to have three modes of operation depending on the GPS coverage level of each device, and three communication modes depending on the signal strength received by the console device of the carrier device.

Both the intensity of the signal emitted by the carrier device and the signal emitted by the satellites are influenced by several factors, such as the weather, precipitation, temperature, or obstacles such as forests, mountains, buildings, open spaces or the sea. In addition, the intensity of the signal emitted by the carrier device changes with respect to the distance between it and the console. Therefore, as a rule the farther one device is from the other the weaker the signal intensity will be.

In a first mode of operation known as "positioning", which has the particularity of offering the maximum functionality to the user, both devices are in communication at a distance allowing a fluid data exchange and have sufficient GPS coverage to perform a complete calculation of their respective distances. In this mode the carrier device 120 is configured to transmit -and the console to receive- both the pulsed radiotracking signals and the GPS positioning information. This information exchange is continuous and allows the console device to send configuration parameters to the carrier device.

When it is determined that the carrier device does not have sufficient satellite coverage to update its position, it optionally enters a data sending mode in which it retransmits the last geographical coordinates calculated. The user can also be given the option of being guided by the radiotracking pulses.

As soon as it is determined that the console does not have sufficient satellite coverage but the carrier device does, the positioning module can be disabled temporarily to save energy and the user given the option to be guided by the radiotracking pulses, or using the last position information received from the carrier.

Instead, when it is determined that both the console 110 and the device 120 lack satellite coverage, a second mode of operation is activated known as "radiotracking", in which the carrier device emits only electromagnetic energy pulses, allowing the console to adjust the last information position calculated for the carrier. Even this operation mode is advantageous with respect to the solutions of the state of the art, as it allows using the pulses received and the corresponding directional information to update the last position of the mobile carrier, allowing tracking with a lower accuracy yet still useful to the user, while waiting for the satellite coverage to improve. This mode guarantees tracking of the carrier, even if it is inaccurate, preventing it from being lost completely.

In this second mode of operation, when the link with the positioning satellites is restored, the user can optionally be offered the choice to continue in this mode of operation or switch to the former "positioning" mode. The advantage of switching is recovering an exact calculation of the position of the devices, while the advantage of remaining in the second mode of operation is that, as the sensitivity of the pulse receiver 301 is greater than that of the data receiver in the communications module 302, the range for receiving signals with low intensity is greater and can typically exceed by 2 to 50 times the range of the first mode of operation.

Switching between the two modes can also be configured as automatic so that the console microprocessor decides, in view of the quality and signal intensity of the data signal received, whether or not it is better to switch modes. This can be done based on the decision that, if the quality is poor and the data received cannot be properly decoded, it is preferable to receive energy pulses that can at least help to track the carrier, such as in the second "radiotracking" mode of operation, than to risk losing contact with the carrier altogether.

The third mode of operation is known as "pulse geo-fencing" and has the particularity of establishing a radius of action around the console in which the carrier device transmits radiotracking energy pulses at a frequency lower than in the "radiotracking" second mode of operation, and the positioning modules are deactivated. When the carrier moves out of this radius, an alarm is set off so that the console initiates a search and track procedure as in the first mode of "positioning" operation. The advantage of this third mode, "pulse geo-fencing", is when the user is certain that the carrier will be within the defined area for some time, a great amount of energy is saved and the duration of the batteries of both devices is lengthened considerably. The autonomy of the devices increases by a factor of 10 to 50 compared to the other modes of operation.

It is also advantageous in applications in which one console supervises multiple carriers. The high number of constant trackings required to ensure that no carrier is lost represents a substantial effort to the user. However, the "pulse geo-fencing" mode allows maintaining control over an area and expend time and concentration only on searching and tracking the few carriers that are out of the specified area.

Another advantage of the "pulse geo-fencing" mode is that the devices use very little power in this mode, as while the carrier is within the radius of action the devices will switch to a configuration of low consumption parameters. An example of the frequency of energy pulse transmission can be seen in FIG. 8. This comprises a minimum pulse transmission frequency of the carrier device, at a low power, allowing the console, after calculating the reception power, to estimate whether the carrier is inside or outside the previously defined radius. The energy saved can be later used if it is necessary to undertake a search and track operation for a stray carrier.

The changes between operation modes are applied by means of default parameters programmed in each device or, when conditions allow, by telecommands issued by the console, whether automatically or manually by offering the option to the user, as described above.

These operation modes are shown in Table 1.

**Table 1**

| GPS Coverage Console | GPS Coverage Carrier | Radiotracking | Mode of operation |
|---|---|---|---|
| YES | YES | Optional | Positioning |
| NO | YES | YES | Optional Positioning or Radiotracking, or combination thereof |
| YES | NO | YES | Optional Positioning or Radiotracking, or combination thereof |
| NO | NO | YES | Radiotracking |

As the intensity of the signal emitted by the carrier device changes in relation to the distance between it and the console, so that the farther one device is from the other the lower the intensity of the signal, several communication modes are defined.

A first communication mode known as "bi-directional" has the particularity that both devices are at a distance allowing to exchange data between the console and at least one carrier device. In one example of embodiment this data exchange is possible at distances between the devices that are normally low.

As the carrier or the user move so that they are further from each other, a point is reached where, given the relatively low reception sensitivity of the carrier device, the commands transmitted by the console device are not received correctly. However, it is still possible to communicate data from the carrier device to the console, given the latter's high reception sensitivity. In this situation a second "uni-directional" communication mode is entered. This embodiment has the advantage that the positioning data of the carrier can still be communicated at relatively high distances between the devices, which can be 2 to 5 times greater than in the bi-directional mode.

As the devices move even further away from each other, a third communication mode is established known as "no data", which has the particularity that the devices are so far from each other that data communication between them is not possible. Therefore, in this mode the carrier device is configured to enter the radiotracking mode by default and send a pulsed signal that allows the console device to estimate the direction and distance to the carrier at very large distances between the devices, which can be 2 to 50 times greater than in the other two modes of operation.

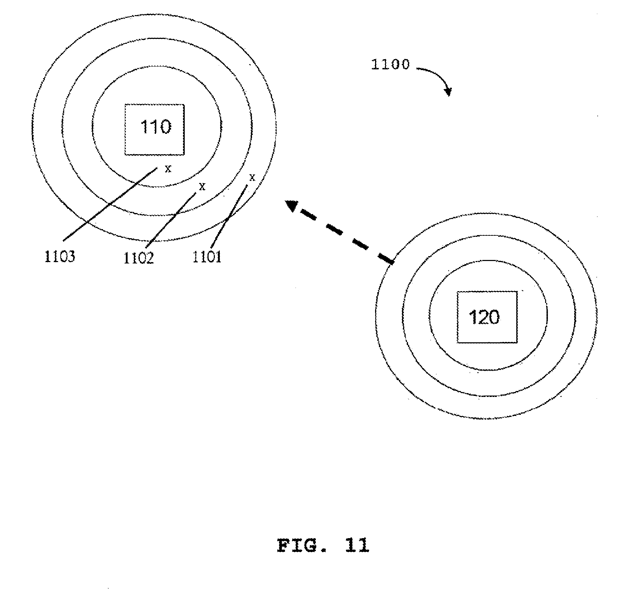

These three communication modes are represented in FIG. 11, which shows the three coverage areas according to the reception sensitivity of the devices. This representation shows a carrier device 120 approaching the console device 110 in the direction indicated by the broken arrow. In the initial position, the devices are so far away from each other that there is no communication between them. When they are nearer, the carrier 120 will enter the first sensitivity area of the console device, represented by the cross in position 1101. In this area the second operation mode "radiotracking" and the third communication mode "no data" are established, allowing the console to obtain a first estimate of the approximate direction to the carrier. This in turn allows the user to start moving towards the carrier.

As the two devices get nearer to each other, the carrier 120 will enter the sensitivity radius represented by the cross 1102. In this area the first operation mode "positioning" and the second communication mode "uni-directional" will be established, allowing the console to receive the geographical coordinates of the carrier in addition to the radiotracking pulsed signal. Therefore the exact position of the carrier can be determined.

One of the great advantages of the invention can be seen in the border between these two areas. If the carrier moves away again and enters area 1101, a conventional system of the prior art would completely lose the target. However, the system object of the invention will keep a "hold" allowing an approximate tracking even in these circumstances by switching from the first operation mode "positioning" to the second operation mode "radiotracking". It should be noted that the increase in the radius of action from area 1102 to area 1101 represents an increase in the area of action covered and monitored by a factor of 4.

At the same time, when the carrier comes nearer and is again within the radius of action of area 1102, it is possible to know the carrier position accurately and therefore give the user an accurate graphical indication of the direction to follow and the distance between the two devices by switching from the second operation mode, "radiotracking" to the first operation mode "positioning". The radiotracking systems of the prior art cannot offer this accuracy in the positioning of the target.

FIG. 12 and FIG. 13 show the graphical representation on the screen seen by the console user and how the data and graphs change with the changes in the mode. FIG. 12 shows the representation in the radiotracking operation mode and the changes according to the intensity of the signal received and the satellite coverage, or equivalently the sensitivity areas. FIG. 13 shows similar changes, once inside the "uni-directional" and "bi-directional" communication areas.

Finally, still with reference to FIG. 11, when it comes even closer the carrier will be in area 1103, and the "bi-directional" communication mode will be established, maintaining the first operation mode "positioning", allowing the carrier device to be configured by the console. This dynamic configuration provides great advantages in terms of saving location and tracking times, reducing user effort and increasing device autonomy, as described above.

The changes between operation modes are applied according to default parameters programmed in each device, or when conditions allow, by means of telecommands issued by the console automatically or manually by the user. At any time of operation, when the devices are working, they will be in some operation mode and some communication mode, depending on the link quality between the device and a GPS satellite, and the link quality between the console and at least one carrier device.

The operation mode and communication mode in which the carrier device or console are in can be represented in the console screen, as well a other data of interest to the user, such as the signal intensity, the GPS coverage, the positional information of the carrier together with the assigned communication frequency, the transmission rate, the device speed of movement, an indicator of the GPS module status, a telemetry messages counter, the time elapsed since the last update, the intensity of the energy pulses, the direction and distance to follow to allow tracking and locating the carrier, a battery voltage indicator, the antenna selected, whether it is internal or external, and other telemetric data such as operation parameters of the carrier device or of sensors coupled to it.

It is also possible to provide an indicator of the precision in the calculation of the direction and distance. This indication can be based on whether at a given time only the energy pulses are used to estimate these values, or instead the reception of positional values of the carrier device, and/or the magnetic sensor, and/or also the accelerometer. It is possible to determine according to this parameter whether to switch between operation modes or not. The time elapsed since the last update can also be used for this purpose, so that if too much time elapses in an area of low satellite coverage the mode can be switched to "radiotracking".

Optionally, a distance threshold can be defined at which the console will send a command to turn on a light in the carrier device, or to make it emit an audible signal, aiding its location when it is close to the user.

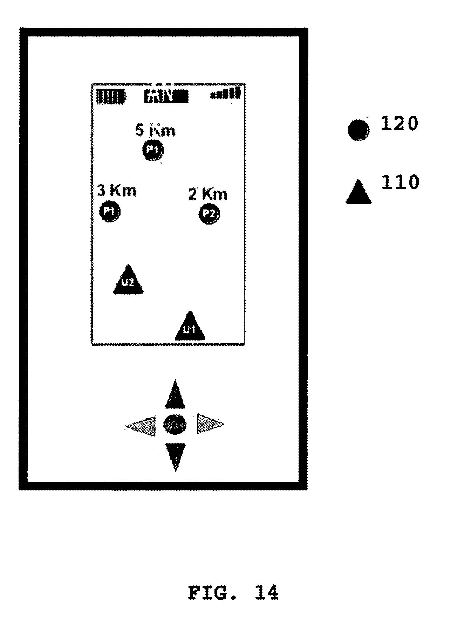

More generally, the console is also adapted to have a plurality of carrier devices registered, allowing to search and track a group of carriers. Provided all the carriers to be located are registered at some point, they can be subsequently selected to locate a specific carrier. This embodiment is shown in FIG. 14. Optionally, it is possible to make a group selection so that the console is adapted to display cyclically the parameters of interest, previously defined by the user for each carrier in map format.

In this mode of operation the console is configured to request the last update of the position information for each carrier moments before it displays it on screen, in order to give the user the information in real time. This characteristic is advantageous for mobile carriers, as they can change their position considerably from the time of one display to the next.

In another example of embodiment there can be more than one user cooperating in the search for the same carrier, or in the search for a different carrier that is known to belong to a herd and therefore accompanies the first carrier, with the device attached, in its movement. In this type of environments the identification numbers of one or more carriers may be shared by direct data exchange between consoles.

The different logical modules, blocks and circuits described in relation to the examples and embodiments can be implemented by a general application processor, a digital signal processor DSP, an application-specific integrated circuit ASIC, a field-programmable gate array FPGA, or another programmable device, or a combination of at least two of these.

The methods and algorithms described can form part of embodiments implemented directly in hardware, in a software module running on a processor, or a combination thereof. Specifically, the data communication modules can be implemented either as an electronic device, as a Software Definable Radio, or a software programmable radio transceiver, or a combination thereof. The software module can reside in a RAM memory, flash memory, ROM memory, EPROM memory, EEPROM memory, registries, hard drive, removable drive, CD-ROM, DVD-ROM or any other storage means known in the state of the art.

A person skilled in the art will be aware that many variations of the embodiments described are possible using the common general knowledge in the field in question and the teachings described. Therefore, different examples and embodiments described can be combined by a person skilled in the art without departing from the concept of the invention.

The examples, embodiments and drawings have not been described in any limiting form, except to give an explanation of the inventive concept in its widest sense according to the principles and teachings of the novel characteristics described. Instead, the inventive concept is described by the following claims.

## Claims

1. Method in a radiotracking system for locating and tracking at least one carrier, the system comprising at least one user console and at least one device attached to the carrier, the method comprising:
transmission by the at least one carrier of at least one signal indicating its location;
reception by the at least one console of the at least one signal;
determination of the position of the console; and
provision of information to the console user to allow locating and tracking the carrier based on at least the position of the console and the at least one signal indicating the location of the carrier.

2. Method according to claim 1, wherein the provision of information to the user comprises providing at least one from among the position in the form of geographical coordinates, the position on a map, the direction in the form of an arrow, the distance, or a combination thereof.

3. Method according to claim 2, wherein the signal transmitted by the at least one carrier comprises at least one energy pulse.

4. Method according to claim 3, wherein the signal transmitted by the at least one carrier comprises the position data in the intervals between the pulses, and the determination of the position data of the device comprises the extraction of the data from these intervals.

5. Method according to any of the preceding claims, comprising:
a first mode of operation wherein the provision of information to the user is made based on determining the location of the carrier using at least the position data of the console and the at least one carrier; and
a second mode of operation wherein the provision of information to the user is made based on determining the location of the carrier using the data of the at least one energy pulse;
thereby allowing a continuous and uninterrupted search and tracking.

6. Method according to any of the preceding claims, wherein the at least one console transmits configuration commands to the at least one carrier, allowing to modify a plurality of parameters, among which are the transmission power of the pulsed signal or the data signal, the amplitude and duration of the at least one pulse, the interval between at least two pulses, or the frequency or rate of data transmission, or the change of operation and communication modes.

7. Method according to claim 6, wherein the autonomy of the devices can be managed based on the configuration of parameters allowing to minimise the power consumption and therefore maximise the lifetime of the device.

8. Method according to any of the preceding claims, additionally comprising a third mode of operation in which the functionality for determining the position is disabled in both devices, and information is provided to the user based on determining the location of the carrier within a maximum radius using the data of an energy pulse train emitted periodically at a low power.

9. Method according to any of the preceding claims comprising, depending on the intensity of the signal received by the console device:
a first bi-directional communication mode that allows the console to receive data emitted by at least one carrier device and transmit configuration data to the carrier device; and
a second uni-directional communication mode that allows the console to receive data.

10. Radiotracking device for locating and tracking a carrier of the device, **characterised by**:
at least one radio frequency energy pulse transmitter;
at least one data communication module;
at least one positioning module; and
at least one controller;
and wherein the carrier device is configured to provide information on its location, allowing to search for and track it.

11. Radiotracking console device for locating and tracking at least one carrier by at least one user, **characterised by**:
at least one radiofrequency energy pulse receiver;
at least one data communication module;
at least one positioning module; and
at least one controller;
and wherein the console device is configured to provide information on the location of the at least one carrier to the user, allowing to search for and track it.

12. Device according to any one of claims 10 or 11, wherein the at least one positioning module comprises a module for determining the geographical coordinates of the device based on a satellite communications protocol.

13. Device according to claim 12, wherein the at least one positioning module comprises at least one magnetic sensor and/or at least one accelerometer.

14. Device according to any one of claims 10 to 13, wherein the at least one data communication module comprises at least one transceiver and the at least one controller is adapted to allow data transmission or reception from the data communication module in the intervals between pulses received by the pulse receiver.

15. Device according to any one of claims 11 to 14, wherein the at least one pulse receiver is adapted to extract at least one parameter from the at least one pulse, among which is the intensity, or duration, or phase, or the interval between at least two pulses.

16. Device according to any one of claims 11 to 15, wherein the at least one controller is adapted to determine the position, the direction and the distance to the carrier based on the data received by the data communication module, or the calculation of the geographical position of the console, or the parameters extracted from the pulses received, or a combination thereof.

17. Device according to any one of claims 11 to 16, adapted to transmit configuration parameters allowing to modify a plurality of parameters, among which are the transmission power of the pulsed signal or the data signal, the amplitude and duration of at least one pulse, the interval between at least two pulses, or the frequency or rate of data transmission.

18. Device according to any one of claims 11 to 17, comprising at least one energy pulse transducer, at least one display and a keyboard, and wherein the controller is adapted to provide information to a display on the carrier's position, direction and distance from the carrier.

19. Radiotracking system for locating and tracking at least one carrier, the system comprising at least one carrier device according to any of claims 10 and 12 to 14, and at least one console device according to any of claims 11 to 18.
